# EUROPEAN PATENT SPECIFICATION

(11) **EP 3 559 533 B1**
(45) Date of publication and mention of the grant of the patent: **13.03.2024**
(21) Application number: 17842344.8
(22) Date of filing: 08.12.2017
(51) Int. Cl.: F16L 17/035, A47L 15/42, F16L 17/073, A47L 15/50, F16L 27/12

(54) **COUPLING FOR A SEALING ATTACHMENT OF A MEDIUM CONNECTOR IN DISHWASHERS OR SIMILAR MACHINES WITH AN APPROPRIATE INSERT**
KUPPLUNG FÜR EINE DICHTUNGSBEFESTIGUNG EINES MEDIUMSTECKERS IN GESCHIRRSPÜLMASCHINEN ODER ÄHNLICHEN MASCHINEN MIT EINEM GEEIGNETEN EINSATZ
ACCOUPLEMENT À INSERT APPROPRIÉ POUR LA FIXATION ÉTANCHE D'UN RACCORD DE MILIEU DANS DES LAVE-VAISSELLE OU DES MACHINES SIMILAIRES

(30) Priority: 22.12.2016 SI 201600306
(43) Date of publication of application: 30.10.2019
(73) Proprietor: Brinox, D.O.O., 1215 Medvode (SI)
(72) Inventor: STEPIC, Bostjan, 1295 Ivancna Gorica (SI)
(74) Representative: Pipan, Marjan
(86) International application number: PCT/SI2017/000033
(87) International publication number: WO 2018/117979

(56) References cited:
- EP-A1- 0 631 755
- FR-A1- 2 242 631
- US-A- 4 101 148
- US-A- 5 267 759

## Description

The object of the invention is a coupling for a sealing attachment of a medium connector in dishwashers and similar machines with an appropriate insert. The coupling consists of a flange and a coupling element, into which a displaceable insert - a sealing element provided with two gaskets - is inserted. The invention belongs to class F16K 17/10 of the International Patent Classification.

The technical problem that is successfully solved by the present invention is a constructional solution to a coupling for a sealed connection of a medium attachment in dishwashers or similar machines, which should provide for efficient sealing only by approaching the coupling element to an input pipe flange without use of any other threaded or similar pipe connections.

A coupling with a coupling device for a sealing connection of two pipes is known from patent document DE 10317150. A flange of the insert to be inserted into a chamber of a dishwasher is positioned to be in the axis with the coupling of the machine. An elastic sealing element (O-ring) is inserted into the coupling of the machine. Sealing between the flange and the coupling of the machine is provided for by compressed air which pushes and holds the elastic sealing element against the flange. The compressed air acts upon the elastic sealing element and provides for continuous sealing. When sealing is no longer needed, negative pressure is led into air ducts instead of the compressed air, which sucks the elastic sealing element backwards from the flange of the insert into the coupling of the machine.

It is also known a connector assembly from the document US 5,267,759 for resiliently actuated coupling of a first component of cylindrical configuration to a second component with a cylindrical recess utilizes a pair of interfitting inner and outer annular ring elements having first and second axial ends and axially extending overlying body portions. The first ends extend inwardly of the recess and the second ends are in surface contact with the circumferential surface of the cylindrical component. Each ring elements has a radially extending flange on one of its ends which extends along the ends of the other ring element into close surface relationship with one of the components. Resiliently deformable annular elements are disposed between the radial flange of each of the ring elements and the body portion of the other ring element, and adjustable elements on the two ring elements effect axial movement of the ring elements relative to each other to effect deformation of the resiliently deformable elements, thereby producing tensioning forces between the deforming elements and the component in surface contact therewith to secure the components in assembly.

It is a drawback of said solution that the compressed air duct must be arranged in the coupling around the elastic sealing element in a way to evenly push it onto the flange, otherwise the sealing may pose a problem. Moreover, the elastic sealing element must be manufactured very precisely and with identical elasticity over its entire circumference, otherwise it fails to seal both in pushing and vacuuming. If the O-ring does not provide for adequate sealing, the water emerges from behind the gasket and consequently penetrates into pneumatic control elements.

The coupling for a sealing attachment of a medium connector in dishwashers and similar machines with an appropriate insert of the invention consists of a flange and a coupling element, into which a displaceable insert, a sealing element with a horizontal and vertical gasket is inserted, which provides for efficient sealing between the flange and the coupling element upon the pressure of the medium.

Such coupling for a sealing attachment of the invention provides for efficient sealing only by approaching and contacting the coupling element to the flange. The pressure of the medium when passing through the coupling element provides for sufficient pushing force to displace the insert, the sealing element, and consequently also efficient sealing of the coupling between the flange and the coupling element without use of any other threaded or similar pipe connections.

The invention will be explained in more detail on the basis of an embodiment and drawings, in which:
- **Figure 1**: shows a cross-section of a coupling for a sealing attachment of the invention in a non-sealed position;
- **Figure 2**: shows a cross-section of a horizontal gasket (5);
- **Figure 3**: shows a cross-section of a vertical gasket (4);
- **Figure 4**: shows a cross-section of a coupling for a sealing attachment of the invention in a sealing position and illustration of a fluid medium flow;

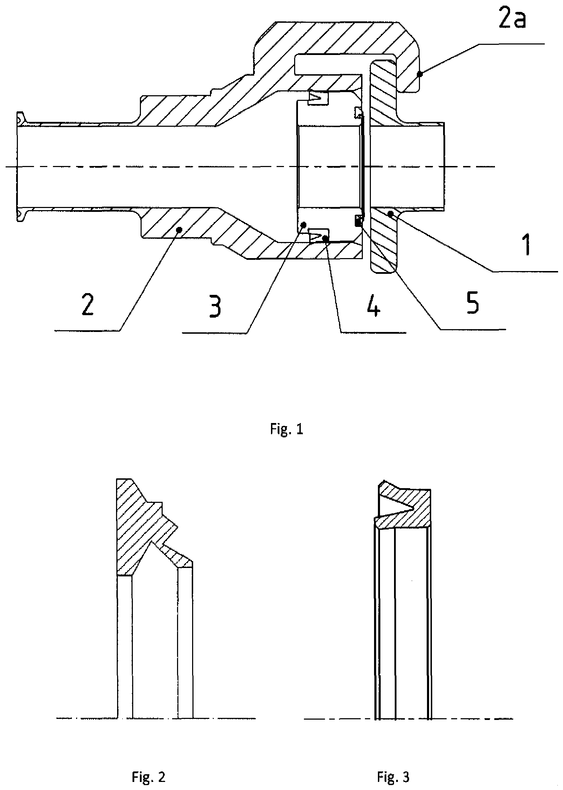

A coupling for a sealing attachment of a medium connector in dishwashers and similar machines with an appropriate insert of the invention is shown in Figure 1 in a non-sealed position. The coupling consists of a coupling element 2 and a flange 1. The coupling element 2 houses a displaceable appropriate insert - a sealing element 3 in the form of a wide and thick ring provided with two grooves, into which gaskets 4, 5 are inserted. The vertical gasket 4 which is arranged in the groove on the circumference of the sealing element 3 is intended for vertical sealing, while the front horizontal gasket 5 arranged in the front groove of the sealing element is intended for horizontal sealing.

The coupling element 2 with its attachment 2a is positioned in the axis with the flange 1. To provide for efficient sealing, the elements of the coupling of the invention are shaped such that increased medium pressure results in better sealing of the coupling.

The vertical gasket 4, which is shown in cross-section in Figure 3, arranged on the circumference of the sealing element 3 is provided with tabs against the direction of medium pressure, which tabs expand upon the pressure of the medium and provide for efficient sealing between the coupling element 2 and the sealing element 3. The pressure of the medium also pushes the sealing element 3 towards the flange 1. The horizontal gasket 5 which is shown in cross-section in Figure 2 is shaped to change its shape when the medium flows through the coupling. The sealing tab of the horizontal gasket 5 expands in direction of the pressure of the medium and abuts on the flange 1, thus providing for the sealing between the sealing element 3 and the flange 1, while the flow of the media through the sealing element is unobstructed.

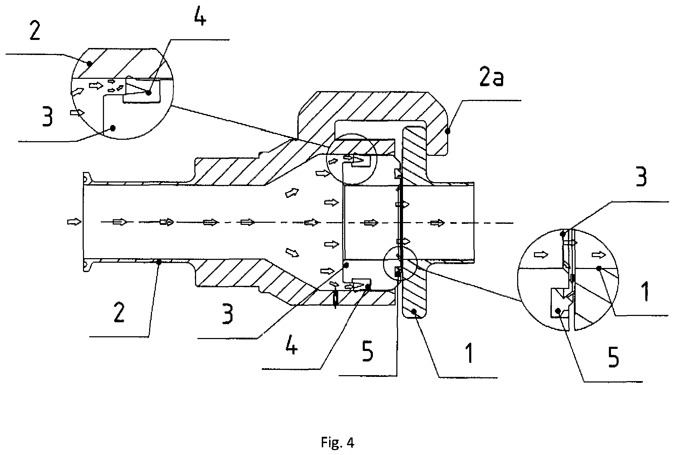

The above-described position of the coupling element 2 and the flange 1 and of the sealing element in the sealing position of the coupling of the invention is shown in Figure 4.

In the event of no flow of the medium into the coupling element 2, the sealing between the sealing element 3, the coupling element 2, and the flange 1 is not provided for. In the event of absence of medium pressure in the coupling of the invention, the flange 1 automatically moves away from the attachment 2a of the coupling element 2 due to the lack of pressure, thus pushing the sealing element 3 somewhat into the interior of the coupling element 2.

When the flange 1 is disengaged from the machine, the sealing element 3 gets displaced in the axis of the coupling element 2. The sealing element 3 is formed on the front side in a way that, when the sealing element 3 with the flange 1 is pushed, this push causes the sealing element 3 to displace in the axis of the coupling; the horizontal gasket 5 is thus prevented from getting damaged.

The vertical gasket 4 can be made from EPDM (Ethylene Propylene Diene Terpolymer), the horizontal gasket 5 can be made from HPU (Hydrolysis Resistant Polyurethane), while the sealing element 3 can be made from a PTFE material (Polytetrafluoroethylene).

The advantage of the present coupling of the invention lies in the fact that no driving element or any additional energy is needed to displace the sealing element 3 towards the flange 1; the pushing force on the sealing element 3 is provided for by the pressure of the medium (water or compressed air).

## Claims

1. A coupling for a sealing attachment of a medium connector in dishwashers and similar machines with displaceable appropriate sealing element (3), comprising a sealing element (3) in the form of a wide and thick ring provided with two grooves into which a vertical and a horizontal gaskets (4, 5) are inserted and where the vertical gasket (4) is arranged in the groove on the circumference of the sealing element (3) and the horizontal gasket (5) is arranged in the front groove of the sealing element (3), wherein a coupling element (2) with its attachment (2a) is positioned in the axis with a flange (1) of an input pipe, wherein the coupling element (2) houses the sealing element (3)
**characterized in that**
the pressure of the medium pushes in use the sealing element (3) towards the flange (1) and the vertical gasket (4) is provided with tabs against the direction of medium pressure, which tabs expand in use upon the pressure of the medium and provide sealing between the coupling element (2) and the sealing element (3) and the horizontal gasket (5) change in use its shape when the medium flows through the coupling and a sealing tab of the horizontal gasket expands in use in direction of the pressure of the medium and abuts on the flange (1), providing for the sealing between the sealing element and the flange (1), while in use the flow of the media through the sealing element (3) is unobstructed.

2. Coupling according to claim 1,
**characterized in that**
the vertical gasket (4) is made from EPDM (Ethylene Propylene Diene Terpolymer).

3. Coupling according to claim 1,
**characterized in that**
the horizontal gasket (5) is made from HPU (Hydrolysis Resistant Polyurethane).

4. Coupling according to claim 1,
**characterized in that**
the sealing element (3) is made from a PTFE material (Polytetrafluoroethylene).

## Patentansprüche

1. Kupplung für eine Dichtungsbefestigung eines Medienverbinders in Geschirrspülmaschinen und ähnlichen Maschinen mit verschiebbarem geeignetem Dichtungselement (3), umfassend ein Dichtungselement (3) in Form eines breiten und dicken Rings mit zwei Nuten, in die eine vertikale und eine horizontale Dichtung (4, 5) eingesetzt sind, und wobei die vertikale Dichtung (4) in der Nut am Umfang des Dichtungselements (3) angeordnet ist und die horizontale Dichtung (5) in der vorderen Nut des Dichtungselements (3) angeordnet ist, wobei ein Kupplungselement (2) mit seinem Aufsatz (2a) in der Achse mit einem Flansch (1) eines Eingangsrohrs positioniert ist, wobei das Kupplungselement (2) das Dichtungselement (3) aufnimmt,
**dadurch gekennzeichnet, dass**
der Druck des Mediums bei Verwendung das Dichtelement (3) gegen den Flansch (1) drückt und die vertikale Dichtung (4) mit Laschen entgegen der Richtung des Mediumdrucks versehen ist, die sich bei Verwendung des Mediumdrucks ausdehnen und eine Abdichtung zwischen dem Kupplungselement (2) und dem Dichtelement (3) herstellen und die horizontale Dichtung (5) bei Verwendung in Richtung des Drucks des Mediums seine Form verändert, wenn das Medium durch die Kopplung fließt, und eine Dichtungslasche der horizontalen Dichtung sich bei Verwendung ausdehnt und in Richtung des Mediumdrucks und an dem Flansch (1) anliegt, wobei dadurch die Abdichtung zwischen dem Dichtelement (3) und dem Flansch (1) bei Verwendung gewährleistet ist und der Mediumfluss durch das Dichtelement (3) ungehindert ist.

2. Kupplung nach Anspruch 1,
**dadurch gekennzeichnet, dass**
die vertikale Dichtung (4) aus EPDM (Ethylen-Propylen-Dien-Terpolymer) hergestellt ist.

3. Kupplung nach Anspruch 1,
**dadurch gekennzeichnet, dass**
die Horizontaldichtung (5) aus HPU ( hydrolysebeständigem Polyurethan) hergestellt ist.

4. Kupplung nach Anspruch 1,
**dadurch gekennzeichnet, dass**
das Dichtelement (3) aus einem PTFE-Material (Polytetrafluorethylen) hergestellt ist.

## Revendications

1. Un accouplement à insert approprié pour la fixation étanche d'un raccord de milieu dans des lave-vaisselle ou des machines similaires ayant un élément d'étanchéité approprié pouvant être déplacé (3), contenant un élément d'étanchéité (3) en forme d'un anneau large et épais possédant deux rainures dans lesquelles s'insèrent un joint vertical et un joint horizontal (4, 5), et où le joint vertical (4) est arrangé dans la rainure sur la circonférence de l'élément d'étanchéité (3) tandis que le joint horizontal (5) est arrangé dans la rainure de devant de l'élément d'étanchéité (3), et où un élément d'accouplement (2) avec son accessoire (2a) est positionné dans l'axe avec la collerette (1) du tuyau d'entrée, et où l'élément d'accouplement (2) reçoit l'élément d'étanchéité (3),
**caractérisé en ce que**
lors de l'utilisation, la pression du médium pousse l'élément d'étanchéité (3) vers la collerette (1) et **en ce que** le joint vertical (4) dispose d'onglets vers la direction de la pression du médium, moyennant quoi les onglets s'étendent lors de l'utilisation avec la pression du médium, assurant ainsi l'étanchéité entre l'élément d'accouplement (2) et l'élément d'étanchéité (3), et **en ce que** le joint horizontal (5) change de forme lors de son utilisation lorsque le médium coule à travers le couplage, et l'onglet d'étanchéité du joint horizontal s'étend lors de l'utilisation dans la direction de la pression du médium et vient en bute contre la collerette (1), assurant ainsi l'étanchéité entre l'élément d'étanchéité (3), tandis que le flux du média à travers l'élément d'étanchéité (3) n'est pas obstrué lors de l'utilisation.

2. Accouplement selon la revendication 1,
**caractérisé en ce que**
le joint vertical (4) est fabriqué à partir d'EPDM (terpolymère d'éthylène-propylène-diène).

3. Accouplement selon la revendication 1,
**caractérisé en ce que**
le joint horizontal (5) est fabriqué à partir d'HPU (polyuréthane résistant à l'hydrolyse).

4. Accouplement selon la revendication 1,
**caractérisé en ce que**
l'élément d'étanchéité (3) est fabriqué à partir d'un matériel PTFE (polytétrafluoroéthylène).
